# EUROPEAN PATENT APPLICATION

(11) **EP 4 675 819 A1**
(43) Date of publication of application: **07.01.2026**
(21) Application number: 24763954.5
(22) Date of filing: 28.02.2024
(51) Int. Cl.: H01M 50/383, H01M 50/204, H01M 50/30

(54) **POWER STORAGE MODULE**

(30) Priority: 28.02.2023 JP 2023030478
(71) Applicant: Panasonic Energy Co., Ltd., Osaka 570-8511 (JP)
(72) Inventor: MURAYAMA, Chifumi, Kadoma-shi, Osaka 571-0057 (JP); FUJITA, Goro, Kadoma-shi, Osaka 571-0057 (JP)
(74) Representative: Eisenführ Speiser
(86) International application number: PCT/JP2024/007203
(87) International publication number: WO 2024/181475

(57) **Abstract**

A power storage module (10) comprises: a plurality of power storage devices (20); and a housing (30) for accommodating the plurality of power storage devices (20). In a case of abnormality, the power storage devices (20) discharge an internal gas to one side in a first direction. Inside the housing (30), a protective member (40) is provided on the one side in the first direction of the power storage devices (20) located on the one side in the first direction, and a metal/foamed body (50) is provided on a surface, facing the power storage devices (20), in the first direction of the protective member (40).

## Description

### TECHNICAL FIELD

The present disclosure is related to a power storage module.

### BACKGROUND ART

A power storage module houses a plurality of power storage devices in a casing. The power storage device has an exhaust portion serving as a safety mechanism configured to discharge internal gas in case of an abnormality. For example, Patent Literature 1 discloses a power storage module having a flame blocking portion (a protection member) that blocks discharged gas in the case where the gas is discharged from an exhaust portion of a power storage device.

### CITATION LIST

### PATENT LITERATURE

PATENT LITERATURE 1: Japanese Unexamined Patent Application Publication No. 2019-169454

### SUMMARY

By using the power storage module described above, it is possible to guarantee a certain level of reliability; however, as power storage devices are developed to have a larger capacity and a larger output, there is a demand for further enhancement in reliability of power storage modules as well.

Thus, it is an advantage of the present disclosure to provide a power storage module capable of enhancing reliability.

A power storage module of the present disclosure is a power storage module comprising: a plurality of power storage devices; and a casing that houses the plurality of power storage devices therein. Each of the power storage devices is configured, in case of an abnormality, to discharge internal gas to one side in a first direction. A protection member is provided on the one side, in the first direction, of the power storage device positioned on the one side in the first direction within the casing. A porous body having a hole extending three-dimensionally is provided on a surface of the protection member facing the power storage device in the first direction.

The power storage module of the present disclosure is capable of enhancing the reliability.

### BRIEF DESCRIPTION OF DRAWINGS

FIG. 1 is a perspective view indicating a power storage module serving as an example of embodiments.
FIG. 2 is a schematic sectional view indicating a section at A-A in FIG. 1.
FIG. 3 is a schematic sectional view for explaining a flow of gas in case of an abnormality of any of power storage devices.
FIG. 4 is a schematic sectional view indicating a section at A-A in FIG. 1, regarding a power storage module serving as another example of the embodiments.

### DESCRIPTION OF EMBODIMENTS

The following will describe examples of the embodiments of the present disclosure in details. In the following explanations, specific shapes, materials, directions, numerical values, and the like are presented as examples for facilitating comprehension of the present disclosure and may be changed as appropriate in accordance with usage, purposes, specifications, and the like.

### [A Power Storage Module]

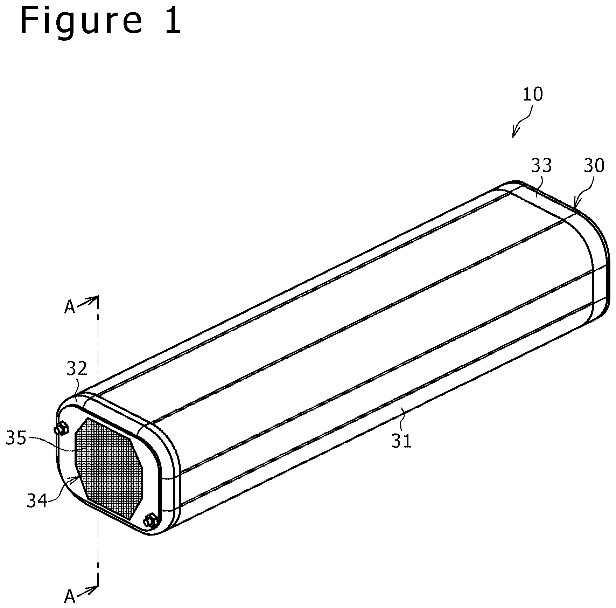

A power storage module 10 will be explained, with reference to FIG. 1 to FIG. 3.

The power storage module 10 may be used as a power source of an electric car, for example; however, power storage devices of the present disclosure are not limited to being a power source of an electric car and may be used as a power source of an electric apparatus driven by a motor, such as an electric tool, an electric assist bicycle, an electric motorbike, an electric wheel chair, an electric tricycle, or an electric cart, for example. Further, the power storage devices of the present disclosure may be used as a power source of any of various types of electric apparatuses used indoor or outdoor, such as a cleaner, wireless equipment, an illumination device, a digital camera, or a video camera, for example.

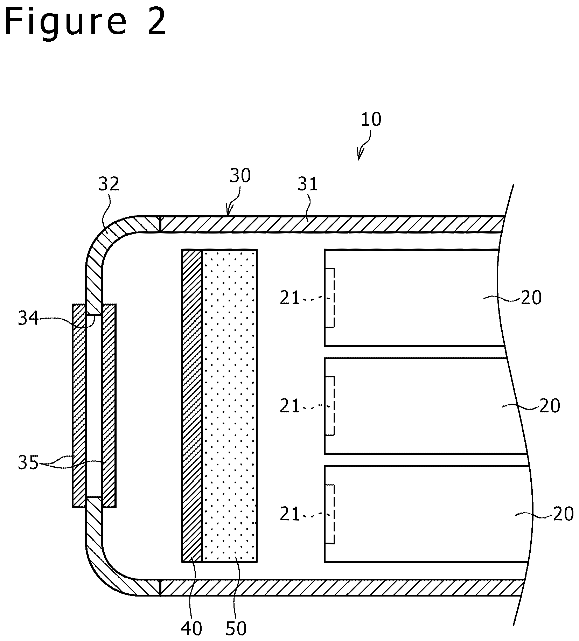

As shown in FIG. 1 and FIG. 2, the power storage module 10 comprises a plurality of power storage devices 20 and a casing 30 that houses the plurality of power storage devices 20 therein. Each of the power storage devices 20 is configured, in case of an abnormality, to discharge internal gas to one side in a first direction (a longitudinal direction). A protection member 40 is provided on the one side, in the first direction, of the power storage devices 20 positioned closest to the one side in the first direction within the casing 30. Provided on the other side, in the first direction, of the protection member 40 is a metal foamed body 50 which serves as a porous body and has holes (through holes) extending three-dimensionally. As explained in details later, by using the metal foamed body 50, it is possible to enhance reliability of the power storage module 10.

### [The Power Storage Devices]

Each of the power storage devices 20 may be, for example, a lithium ion secondary battery having a circular cylindrical shape and has electrodes on both end faces in the first direction (the longitudinal direction). However, the power storage devices of the present disclosure are not limited to being the lithium ion secondary batteries of the present embodiment and may be other types of secondary batteries such as nickel hydrogen batteries, nickel cadmium batteries, or lithium polymer batteries or may be power storage devices such as capacitors. Further, the power storage devices of the present disclosure are not limited to each having the circular cylindrical shape as described in the present embodiment and may each have a rectangular shape.

Each of the power storage devices 20 comprises: a group of electrodes in which a positive electrode and a negative electrode facing each other are wound up while a separator is interposed therebetween; an outer shell housing therein the group of electrodes together with an electrolyte and having a tubular portion and a bottom portion closing one end of the tubular portion; and a sealing member that seals an opening portion provided at the other end of the outer shell. The sealing member is electrically connected to one of the positive and the negative electrodes via a lead wire or the like. The outer shell is electrically connected to the other of the positive and the negative electrodes via a lead wire or the like. Interposed between the sealing member and the outer shell is a gasket that is electrically insulating. Each of the power storage devices 20 has an exhaust portion 21 in at least one end portion in the first direction (the longitudinal direction or the height direction of the power storage device 20).

The exhaust portion 21 is configured to discharge internal gas to the outside in case of an abnormality of the power storage device 20. In other words, each of the power storage devices 20 is configured, in case of an abnormality, to discharge the gas toward the one side in the first direction. However, each of the power storage devices 20 may have exhaust portions 21 formed at both ends in the first direction. The exhaust portion 21 may be an irreversible valve that is opened as a result of breaking a marking, for example, or may be a reversible valve that forms an exhaust path by further compressing a compressed elastic body with gas pressure.

In the present embodiment, all the power storage devices 20 housed in the casing 30 are housed in such a manner that the exhaust portions 21 are oriented toward the one side in the first direction. However, the plurality of power storage devices of the present disclosure are not limited to the present embodiment and may be housed in such a manner that the exhaust portion 21 of at least one of the power storage devices 20 is oriented toward the one side in the first direction. Further, although not shown, the power storage module 10 may have a holder configured to hold the plurality of power storage devices 20 in an aligned manner.

### [The Casing]

The casing 30 is configured to house the power storage devices 20 therein and to also protect the power storage devices 20. The casing 30 includes a tube-like main body 31 of which the longitudinal direction corresponds to the first direction; and lids 32 and 33 configured to close two end portions, in the longitudinal direction, of the main body 31. The casing 30 may be configured so that opening portions at the two ends are closed by water-proof structures realized by having a ring-shaped sealing element interposed between each of the opening portions of the main body 31 and a corresponding one of the lids 32 and 33. Further, although the casing 30 may be configured so that the opening portions at the two ends of the main body 31 are closed by the pair of lids 32 and 33, another configuration is also acceptable in which the main body 31 is a bottomed tube-like structure of which only one of the end faces is open, while only the lid 32 is configured to close the end face opening.

The main body 31 is formed by using metal such as aluminum, has strength, and has an excellent heat releasing characteristic. As long as the material thereof is heat resistant, the main body 31 is not limited to being formed by using metal and may be formed by using resin. The main body 31 has a tubular shape of which the sections in the first direction are substantially rectangular, so as to be formed to have a rectangular tubular shape of which two end portions are open. Further, for the purpose of enhancing the strength, the main body 31 may have a groove or a projection formed along the longitudinal direction. In addition, to electrically insulate the main body 31 made of metal, the surface of the main body 31 may be covered with a laminate film, vinyl, or the like.

The lids 32 and 33 are formed by using hard plastic. However, the lids of the present disclosure are not limited to being made of hard plastic as described in the present embodiment and may be made of metal. The lid 32 is provided with an exhaust port 34, which is explained in detail later. One of the lids 32 and 33 may be provided with an electric discharge connector for electrically discharging the power storage devices 20 or an electric charge connector for electrically charging the power storage devices 20.

The exhaust port 34 is configured to allow communication between the inside housing the power storage devices 20 and the outside of the casing 30 and is configured to discharge the gas discharged from any of the power storage devices 20 from the inside to the outside. The exhaust port 34 is provided on one side in the first direction. However, the exhaust port of the present disclosure is not limited to the present embodiment and may be provided on the other side in the first direction or may be provided either on one side or on both sides in the direction orthogonal to the first direction. A porous body 35 is provided on both sides, in the first direction, of the exhaust port 34. However, the porous body 35 may be provided only on one side or the other side, in the first direction, of the exhaust port 34.

For example, the porous bodies 35 may each be configured with punched metal obtained by forming numerous through holes in an aluminum sheet. Each of the porous bodies 35 may be fixed to the lid 32 by a screw and a bolt. By using the porous bodies 35, it is possible to prevent particles of the contents of the power storage devices 20 included in gas from being released to the outside of the casing 30 together with the gas. In addition, as the gas passes through the porous bodies 35, heat of the gas is transferred to the porous bodies 35, and it is thus possible to have the passing gas cooled.

### [The Protection Member]

The protection member 40 is provided on the one side, in the first direction, of the power storage devices 20 positioned closest to the one side in the first direction within the casing 30. In other words, the protection member 40 is interposed, in the first direction, between the power storage devices 20 positioned closest to the lid 32 and the porous body 35. As explained in details later, the protection member 40 is capable of blocking the gas discharged from any of the power storage devices 20 and flames so as to avoid the situation where the gas and the flames are directly blown onto the porous body 35. Further, it is possible to cause the gas discharged from any of the power storage devices 20 to detour so as to be introduced to the exhaust port 34.

As viewed in the first direction, the protection member 40 is formed to have a substantially rectangular shape that covers the plurality of power storage devices 20 housed in the casing 30. For example, the protection member 40 may be formed as a plate-like structure of which the thickness is less than or equal to 1 mm. The protection member 40 may be configured by using a material having a higher melting point than that of the porous bodies 35. For example, the protection member 40 may be configured by using iron, stainless steel, or ceramics. The protection member 40 may be fixed, together with the porous body 35, to the lid 32, by the screw and the bolt described above as fixing the porous body 35, via a spacer regulating a gap between the protection member 40 and the porous body 35.

Further, because of using a material that has a smaller aperture ratio than the metal foamed body 50 (explained later) or that has no through hole, the protection member 40 is capable of blocking the gas that might otherwise pass through the protection member 40 after going through the metal foamed body 50 and is thus able to enhance a filtering function of the metal foamed body 50.

### [The Metal Foamed Body]

The metal foamed body 50 serving as the porous body that has the holes (the through holes) extending three-dimensionally is provided on the surface of the protection member 40 facing the power storage devices 20 in the first direction. In other words, the metal foamed body 50 is provided on the one side, in the first direction, of the power storage devices 20 positioned closest to the one side in the first direction within the casing 30. As explained in details later, the metal foamed body 50 is able to enhance reliability by capturing, as a filter, the contents of the power storage devices 20 and the like when the internal gas is discharged in case of an abnormality of any of the power storage devices 20, cooling the gas, and absorbing impacts of the gas.

Serving as the porous body having the holes (the through holes) extending three-dimensionally, the metal foamed body 50 is a cellular structure using metal (stainless steel in the present embodiment) that has a large number of small spaces made with gas. However, the metal foamed body of the present disclosure is not limited to being configured by using stainless steel as described in the present embodiment and may be configured by using aluminum, nickel, or copper. Further, the foaming ratio of the metal foamed body 50 is preferably in the range of 80% to 90%. In the metal foamed body 50, the foams may be independent of one another or may be contiguous with one another. The metal foamed body 50 may be fixed to the protection member 40 by an adhesive agent. As for fixing methods other than using the adhesive agent, it is acceptable to fix the metal foamed body 50 to the protection member 40 by using a screw or to insert the metal foamed body 50 together with the protection member 40 by using a screw or the like. Further, when the foamed body is made of metal, it is also acceptable to use mechanical engagement realized by crimping the foamed body with the protection member 40. Alternatively, the foamed body may be attached to the protection member 40 by welding. Further, examples of the porous body other than the metal foamed body 50 include an aggregation of metal particles aggregated so that there are gaps among the particles.

The thickness of the metal foamed body 50 in the first direction is larger than the thickness of the protection member 40 in the first direction. As explained above, because the protection member 40 is less than or equal to 1 mm, the metal foamed body 50 may be greater than or equal to 1 mm. Further, the shape of the metal foamed body 50 as viewed in the first direction may be rectangular, which is substantially the same as the shape of the protection member 40 as viewed in the first direction. Further, the metal foamed body 50 may be larger than the protection member 40. In that situation, the metal foamed body 50 may have formed therein a non-facing portion that does not overlap with the protection member 40 in the first direction. The gas discharged from any of the power storage device 20 is able to go through the inside of the metal foamed body 50, so as to exit through the non-facing portion and to flow toward the exhaust port 34. As compared to an example in which the metal foamed body 50 has the same size as the protection member 40, the metal foamed body 50 having a larger size makes it easier to increase the distance through the metal foamed body 50, makes it easier for the metal foamed body 50 to cool the discharged gas, and makes it easier to capture solid and liquid included in the discharged gas.

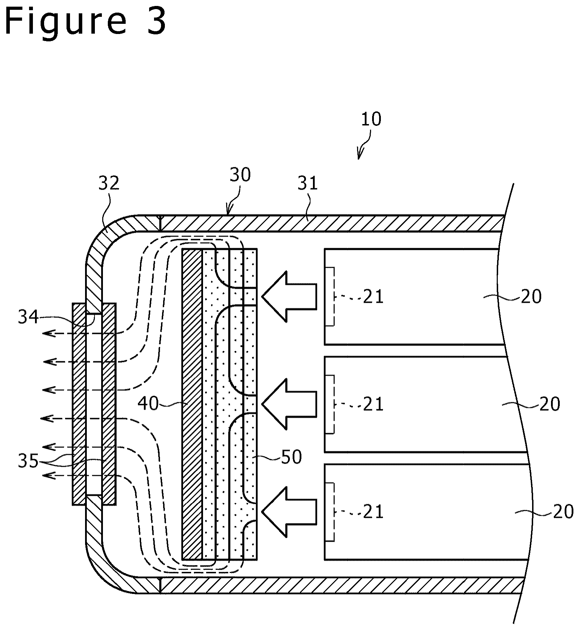

As shown in FIG. 3, in case of an abnormality of any of the power storage devices 20, gas and a flame may be discharged from the exhaust portion 21. The discharged gas includes gas, particles of the contents of the power storage devices 20, and the like. The gas discharged from any of the power storage devices 20 is diffused as a result of colliding with the metal foamed body 50, so that an impact wave occurring at the time of the gas discharge is weakened. The metal foamed body 50 is configured to capture the particles included in the gas and the like.

Further, the gas that has entered the inside of the metal foamed body 50 flows as detouring in a second direction (the direction orthogonal to the first direction and parallel to the protection member 40) within the metal foamed body 50 while being cooled by the metal foamed body 50, so as to be cooled by the porous bodies 35 at the exhaust port 34. The particles that have not been captured by the metal foamed body 50 are captured by the porous bodies 35, so that only gas is discharged to the outside of the power storage module 10.

In this situation, preferably, at least a part of the end face, in the second direction, of the metal foamed body 50 may be exposed from the protection member 40. This configuration is able to promote the discharged gas to move in the second direction within the metal foamed body 50. Accordingly, as for the attachment of the metal foamed body 50 to the protection member 40, it is desirable to ensure that at least one of a plurality of straight lines extending in the second direction is free from a fixation location used for the fixation to the protection member 40. In the situation where a fixation location is provided on every straight line, it is desirable to stagger the positions of the fixation locations in the second direction.

In recent years, as the power storage module 10 is developed so that the power storage devices 20 have a larger capacity, there is an increasing tendency in the amount of the gas to be discharged in case of an abnormality of any of the power storage devices 20. Due to the increase in the amount of the discharged gas from the power storage devices 20 described above, the time period of discharging gas including high-temperature particles tends to be longer. Consequently, for example, the protection member 40 easily reaches a high temperature and has a possibility of being damaged (by developing holes) as being eroded by the high-temperature particles or the like. As a result, because the gas comes into direct contact, not only with the protection member 40 directly receiving the gas, but also with the porous bodies 35 at the exhaust port 34, it is feared that the discharged gas might similarly melt or go through the porous bodies 35 at the exhaust port 34 and be released to the outside of the casing 30 while maintaining a high temperature and momentum thereof.

In the power storage module 10 according to the present embodiment, because the metal foamed body 50 is provided on the other side, in the first direction, of the protection member 40, it is possible, when the gas is discharged in case of an abnormality of any of the power storage devices 20, to enhance reliability by capturing the high-temperature particles and the like present in the gas with the filtering action, cooling the gas, and diffusing impacts of the gas.

More specifically, when the gas is discharged in case of an abnormality of any of the power storage devices 20, the gas enters the inside of the metal foamed body 50, so that the metal foamed body 50 captures more high-temperature particles and the like present in the gas. Further, the gas that has entered the inside of the metal foamed body 50 is blocked by the protection member 40 as described above and flows while detouring around the protection member 40. Thus, the flow path within the metal foamed body 50 becomes longer, so that the metal foamed body 50 captures more high-temperature particles and the like present in the gas.

Further, when the gas is discharged in case of an abnormality of any of the power storage devices 20, the gas enters the inside of the metal foamed body 50 so that the metal foamed body 50 cools the high-temperature gas. Also, the gas that has entered the inside of the metal foamed body 50 is blocked by the protection member 40 as described above so as to flow while detouring around the protection member 40. Thus, the flow path within the metal foamed body 50 becomes longer, so that the metal foamed body 50 exerts an enhanced effect in cooling the high-temperature gas.

In addition, when the gas is discharged in case of an abnormality of any of the power storage devices 20, the gas enters the inside of the metal foamed body 50 and is diffused. Consequently, it is possible to avoid the situation where the protection member 40 is damaged by an impact wave of the discharge of the gas.

As explained above, when the gas is discharged in case of an abnormality of any of the power storage devices 20, the metal foamed body 50 is able, as a filter, to capture the high-temperature particles and the like present in the gas, to cool the gas, and to diffuse the impacts of the gas. Thus, in comparison to a conventional power storage module provided only with the protection member 40, it is possible to design the protection member 40 to be thinner. Consequently, by making the thickness of the protection member 40 smaller than that in the conventional power storage module provided only with the protection member 40 and further providing the metal foamed body 50 which is lightweight, it is possible to realize reducing the weight of the power storage module 10.

### [Another Embodiment]

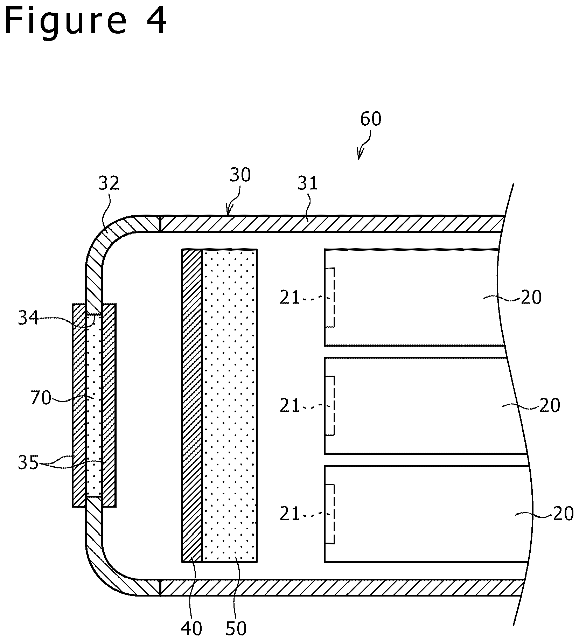

A power storage module 60 according to another example of the embodiments will be explained with reference to FIG. 4. In the following sections, some of the elements that are the same as those in the power storage module 10 described above will be referred to by using the same reference characters, and explanations of those elements will be omitted.

In the power storage module 60, the exhaust port 34 of the casing 30 is provided with a metal foamed body 70. In the present embodiment, the metal foamed body 70 is interposed between the porous bodies 35 provided at the exhaust port 34. It should be noted, however, that the present disclosure is not limited to the present embodiment, and the metal foamed body 70 may be provided in place of the porous body 35 positioned on one side in the first direction. The metal foamed body 70 may use the same material as that of the metal foamed body 50 described above. Further, the shape of the metal foamed body 70 as viewed in the first direction may preferably be substantially the same as the shape of the exhaust port 34.

When the power storage module 10 in the present embodiment is used, the metal foamed body 70 is capable of capturing, with certainty, the high-temperature particles and the like present in the gas which were not captured by the metal foamed body 50. It is therefore possible to avoid the situation where the high-temperature particles and the like present in the gas are discharged to the outside of the power storage module 10. In addition, it is possible to enhance the effect of cooling the gas passing through the exhaust port 34.

Further, the present disclosure may further be described with the following embodiments:
Aspect 1: A power storage module comprising: a plurality of power storage devices; and a casing that houses the plurality of power storage devices therein. Each of the power storage devices is configured, in case of an abnormality, to discharge internal gas to one side in a first direction. A protection member is provided on the one side, in the first direction, of the power storage device positioned on the one side in the first direction within the casing. A porous body having a hole extending three-dimensionally is provided on the other side, in the first direction, of the protection member.
Aspect 2: The power storage module according to aspect 1 in which a thickness of the porous body in the first direction is larger than a thickness of the protection member in the first direction.
Aspect 3: The power storage module according to aspect 1 or 2 in which a shape of the porous body as viewed in the first direction is substantially same as a shape of the protection member as viewed in the first direction.
Aspect 4: The power storage module according to any one of aspects 1 to 3 in which the protection member is a member that has a smaller aperture ratio than the porous body or that has no through hole.
Aspect 5: The power storage module according to any one of aspects 1 to 4 in which, in a second direction perpendicular to the first direction, an end face of the porous body is exposed from the protection member.
Aspect 6: The power storage module according to any one of aspects 1 to 5 in which, in a second direction perpendicular to the first direction, the porous body has a part protruding from the protection member.
Aspect 7: The power storage module according to any one of aspects 1 to 6 in which the porous body is a first foamed body; the casing has an exhaust port which allows communication between an inside space housing the power storage devices therein and an outside of the casing and which discharges the gas discharged from any of the power storage devices from the inside space to the outside; and the exhaust port is provided with a second foamed body.

The present disclosure is not limited by the embodiments described above and modification examples thereof. Needless to say, various changes and improvements may be made within the scope of the matters set forth in the claims of the present application.

### REFERENCE SIGNS LIST

10 Power storage module, 20 Power storage device, 21 Exhaust portion, 30 Casing, 31 Main body, 32 Lid, 33 Lid, 34 Exhaust port, 35 Porous body, 40 Protection member, 50 Metal foamed body (Porous substance or First foamed body), 60 Power storage module, 70 Metal foamed body (Second foamed body)

## Claims

1. A power storage module comprising:
a plurality of power storage devices; and
a casing that houses the plurality of power storage devices therein, wherein
each of the power storage devices is configured, in case of an abnormality, to discharge internal gas to one side in a first direction,
a protection member is provided on the one side, in the first direction, of the power storage device positioned on the one side in the first direction within the casing, and
a porous body having a hole extending three-dimensionally is provided on a surface of the protection member facing the power storage device in the first direction.

2. The power storage module according to claim 1, wherein
a thickness of the porous body in the first direction is larger than a thickness of the protection member in the first direction.

3. The power storage module according to claim 1 or 2, wherein
a shape of the porous body as viewed in the first direction is substantially same as a shape of the protection member as viewed in the first direction.

4. The power storage module according to any one of claims 1 to 3, wherein
the protection member is a member that has a smaller aperture ratio than the porous body or that has no through hole.

5. The power storage module according to any one of claims 1 to 4, wherein
in a second direction perpendicular to the first direction, an end face of the porous body is exposed from the protection member.

6. The power storage module according to any one of claims 1 to 5, wherein
in a second direction perpendicular to the first direction, the porous body has a part protruding from the protection member.

7. The power storage module according to any one of claims 1 to 6, wherein
the porous body is a first foamed body,
the casing has an exhaust port which allows communication between an inside and an outside of the casing and which discharges the gas discharged from any of the power storage devices to the outside, and
the exhaust port is provided with a second foamed body.
